# EUROPÄISCHE PATENTSCHRIFT

(11) **EP 1 172 335 B1**
(45) Veröffentlichungstag und Bekanntmachung des Hinweises auf die Patenterteilung: **13.09.2006**
(21) Anmeldenummer: 01116516.4
(22) Anmeldetag: 07.07.2001
(51) Int. Cl.: C02F 1/44, C02F 1/72, B01D 61/00

(54) **Verfahren zur Reinigung von Kerzenfiltern und Membrananlagen**
Process for cleaning candle filters and membrane systems
Procédé pour nettoyer des filtres à bougie et des installations à membranes

(30) Priorität: 11.07.2000 DE 10033686
(43) Veröffentlichungstag der Anmeldung: 16.01.2002
(73) Patentinhaber: E.On Engineering GmbH, 45896 Gelsenkirchen (DE); E.ON Wasserkraft GmbH, 30457 Hannover (DE)
(72) Erfinder: Geissler, Klaus-Peter, 06246 Bad Lauchstädt (DE); Nebauer, Günter, 45768 Marl (DE); Schallert, Bernd Dr., 46348 Raesfeld (DE)
(74) Vertreter: Cohausz & Florack

(56) Entgegenhaltungen:
- WO-A-99/15256
- DE-A- 3 134 050
- DE-A- 19 807 155
- DE-A- 19 812 591
- US-A- 4 278 548
- PATENT ABSTRACTS OF JAPAN vol. 012, no. 312 (C-523), 24. August 1988 (1988-08-24) & JP 63 080804 A (TORAY IND INC), 11. April 1988 (1988-04-11)

## Beschreibung

Die Erfindung betrifft ein Verfahren zur Reinigung von Kerzenfiltern und Membrananlagen bei der industriellen Aufbereitung von Wasser unter Verwendung von Wasserstoffperoxid.

Bei der Aufbereitung von Oberflächenwasser zu voll entsalztem Wasser, beispielsweise in Kraftwerken, werden immer häufiger Umkehrosmoseanlagen zur Teilentsalzung eingesetzt. Dabei führen im Rohwasser enthaltene Mikroorganismen und makromolekulare Zusatzstoffe, wie sie als Flockungshilfsmittel für die Rohwasserreinigung eingesetzt werden, zur Verblockung der Trennmembranen und der üblicherweise vorgeschalteten Schutzfilter. Makromolekulare Flockungsmittel sind beispielsweise Polyelektrolyte auf der Basis von Polyacrylamid, Polyacrylat, Polyethylenamin und Polyethylenoxid. Durch die Verblockung der Trennmembranen und Schutzfilter sinkt die Durchsatzleistung und die Trennwirkung verschlechtert sich. Diese Problematik ist beschrieben in VGB KraftwerksTechnik 8/99, 77-80.

Es ist bekannt, zur Entkeimung des Rohwassers Oxydationsmittel wie Natriumhypochlorit oder Chlordioxid anzuwenden. Diese Mittel dürfen jedoch nicht auf die Oberflächen von Membranelementen gelangen, da die oxidierende Wirkung zu einer Zerstörung der meist aus Polymerwerkstoffen bestehenden Membranen führt. Eine vorherige Entkeimung mit anschließender Reduzierung des Oxidationsmittels hat daher nur eine beschränkte Wirkung, da ein einmal begonnenes biologisches Wachstum auf und zwischen den Membranen nicht mehr beeinflußt wird.

Außerdem stellen diese Oxidationsmittel und deren Reaktionsprodukte wie adsorbierbare organische Halogene (AOX) Wasserschadstoffe dar.

Es ist ferner bekannt, Wasserstoffperoxid in Kombination mit Silbersalzen dem Rohwasser in Umkehrosmoseanlagen zuzusetzen. Dabei treten jedoch bereits nach kurzer Behandlungsdauer Teilschädigungen der Umkehrosmosemembranen auf, so daß deren Trennwirkung verschlechtert und die Lebensdauer verringert wird.

Es ist auch versucht worden, zur Beseitigung der organischen Verschmutzungen saure, neutrale und alkalische, gegebenenfalls Tenside und Enzyme enthaltende Reinigungsmittel dem Rohwasserstrom zuzusetzen. Dies führt jedoch nur zu einer vorübergehenden Verbesserung der Durchsatzleistung. Fest haftende Ablagerungen, wie sie vor allem durch Flockungshilfsmittel hervorgerufen werden, können auf diese Weise nicht beseitigt werden.

Die DE 198 07 155 A1 betrifft ein Verfahren zur Reinigung von Abwasser durch Kombination einer homogenen katalytischen Oxidation mittels Wasserstoffperoxid mit einem Membrantrennverfahren. Die Membran dient einer sogenannten Nanofiltration, bei der als Permeat ein sogenanntes behandeltes Abwasser anfällt. Die DE 196 10 345 C1 betrifft einen Katalysator zur Oxidation von Abwasserverunreinigungen in Gegenwart von Wasserstoffperoxid. Der Katalysator wird erhalten durch thermische Behandlung einer aus Kobalt, Nickel, Wolfram und Chrom bestehenden Masse, die gegebenenfalls weitere Metalle enthalten kann. Dieser Katalysator kann in Form von Draht, Blech, Spänen oder Pulver vorliegen.

Der Erfindung liegt die Aufgabe zugrunde, ein Verfahren zur Behandlung von Rohwasser bereitzustellen, mit dem Beläge aus organischen, makromolekularen im Rohwasser enthaltenen Verbindungen und/oder Biomasse auf Filtern und Trennmembranen von Filtern oder Membranelementen in einfacher Weise entfernt werden können. Ferner soll die Neubildung solcher Beläge verzögert oder ganz vermieden werden.

Gelöst wird diese Aufgabe durch ein Verfahren zur Reinigung von Kerzenfiltern und Membrananlagen bei der industriellen Wasseraufbereitung unter Verwendung von Wasserstoffperoxid, wobei man einen festen Katalysator unmittelbar vor einer Anordnung, in der sich ein Kerzenfilter unmittelbar im Zulauf vor einer Umkehrosmoseanlage befindet, anordnet und Wasserstoffperoxid dem aufzubereitenden Wasserstrom vor dem Katalysator zusetzt.

Wesentliches Merkmal des erfindungsgemäßen Verfahrens ist, daß der Katalysator in unmittelbarer Nähe zu den ansonsten bekannten Filtern und/oder Membranelementen angeordnet ist. Der Katalysator kann beispielsweise in Form eines Netzes oder eines Gitters um das Filterelement herum angeordnet sein. Im Falle einer Membrananlage sollte der Katalysator unmittelbar vor derselben angeordnet sein. In jedem Fall muß die Anordnung des Katalysators so erfolgen, daß am Ort der möglichen Verschmutzung ausreichend Hydroxylradikale bereitgestellt werden, um die erfindungsgemäß gewünschte Entfernung von Ablagerungen oder Vorbeugewirkung zu bewirken. Andererseits darf der Katalysator nicht direkt an der Membran anliegen, da sonst die freigesetzten Hydroxylradikale die Membran angreifen würden. Zur Definition der Entfernung des Katalysators von der Umkehrosmosemembran soll beispielhaft eine Zeit von etwa 15 Sekunden herangezogen werden, die das zu behandelnde Material benötigt, um vom Katalysator bis zur Membran zu gelangen.

Die erfindungsgemäß geeigneten Katalysatoren sind solche, die aus Wasserstoffperoxid Hydroxylradikale freisetzen können wie Metallkatalysatoren. Erfindungsgemäß geeignete Metallkatalysatoren können Schwermetallkatalysatoren sein oder Katalysatoren aus Metallegierungen. Ein geeigneter Katalysator besteht beispielsweise ein aus einer Co-W-Cr-Legierung, insbesondere 10 bis 60 Masse% Cobalt, 5 bis 50 Masse% Nickel, 5 bis 20 Masse% Wolfram und 5 bis 25 Masse% Chrom. Der Katalysator kann in Form eines Geflechts einer Maschenweite von etwa 5 mm vorliegen. Zur Erzielung der erfindungsgemäß gewünschten Wirkung wird dieses Geflecht über einen Filter in Form einer Kerze gezogen.

Wasserstoffperoxid wird dem Rohwasser vorzugsweise im Überschuß zugesetzt. Die Dosierung von Wasserstoffperoxid kann kontinuierlich oder diskontinuierlich erfolgen. Die Dosierung kann derart erfolgen, dass die Konzentration von H₂O₂ im Rohwasser 2 bis 10 g/m³ beträgt.

Hinter der Zuführung von Wasserstoffperoxid in das aufzubereitende Rohwasser kann eine Mischkammer angeordnet sein.

Das erfindungsgemäße Verfahren kann in einer Wasseraufbereitungsanlage durchgeführt werden und wird nachfolgend beispielhaft erläutert.

Mechanisch geklärtes Rohwasser wird darin der Entkarbonisierungsanlage zugeführt. In getrennten Behandlungsstufen werden FeClSO₄, Calciumhydroxid und Flockungshilfsmittel zugesetzt. Der pH-Wert in der Entkarbonisierungseinheit beträgt etwa 10. Anschließend werden Wasser und Schlamm getrennt und der Schlamm in die Kalkmilcheinspeisung rückgeführt. Das aus der Entkarbonisierungsstufe kommende Rohwasser wird zur Verbesserung der Flockung erwärmt und der sauren Flockung zugeführt. Die Erwärmung kann beispielsweise auf eine Temperatur von etwa 20 bis 25 °C vorgenommen werden. Hier erfolgt in unterschiedlichen Stufen die Zugabe von FeClSO₄ und NaOH und Flockungshilfsmitteln. Der pH-Wert in dieser Einheit beträgt etwa 4. Hier erfolgt eine weitere Verringerung der Trübstoffe durch Einbindung organischer Bestandteile in die Eisenflocken. Durch den pH-Sprung in den sauren oder schwachsauren Bereich im Ablauf werden Bakterien inaktiviert und zusammen mit den geflockten Stoffen ausgetragen. Nach Trennung des Rohwassers von den geflockten Stoffen wird dieses durch ein Kiesfilter geleitet.

Trübungsmessungen an verschiedenen Stufen der bisher erläuterten Aufbereitung zeigten, dass bereits die Entkarbonisierung eine Verringerung der Trübstoffe um etwa 90% schaffte. Die nachgeschaltete Fe(III)-Flockung und auch die Kiesfiltration senkten die Trübungswerte auf etwa 1% des Ausgangswerts. Die zweite Flockungsstufe setzte auch den DOC-Gehalt (dissolved organic carbon) weiter herab. Über die beiden Flockungsstufen wurde das DOC-Niveau um etwa 50% vermindert.

Dem aus dem Kiesfilter abfließenden Rohwasser wird Wasserstoffperoxid zugesetzt. Es erfolgt eine Durchmischung des Rohwassers mit H₂O₂. Der Rohwasserstrom weist eine Konzentration von etwa 6mg/l H₂O₂ auf.

Das H₂O₂ enthaltende Wasser wird über erfindungsgemäße Kerzenfilter geleitet, bei denen der Katalysator in Form eines Geflechts um den Kerzenfilter herum angeordnet ist.

Die Entfernung des Katalysators von der Umkehrosmosemembran ist derart eingestellt, daß das zu behandelnde Material eine Zeit von etwa 15 Sekunden benötigt, um vom Katalysator bis zur Membran zu gelangen.

Der Abstrom aus den Kerzenfiltern wird zur Entsalzung über eine zweistufige Umkehrosmoseanlage und das entsalzte Wasser anschließend einem Permeatbecken zugeführt.

Die Erfindung wird durch das folgende Beispiel weiter erläutert.

### BEISPIEL

In diesem Beispiel wird die Behandlung einer Kesselspeisewasseraufbereitung mit Kerzenfilter und zweistufiger Umkehrosmoseanlage nach dem erfindungsgemäßen Verfahren beschrieben.

Ein unmittelbar im Zulauf vor der Umkehrosmoseanlage befindlicher Kerzenfilter wurde mit einem erfindungsgemäß geeigneten Katalysator ausgerüstet. Die 105 Filterkerzen des Kerzenfilters waren mit einem Drahtgestrick aus einer Co-W-Cr-Legierung (55% Cobalt, 15% Wolfram, 20% Chrom) mit einer Maschenweite von etwa 5 mm überzogen.

Die Anlage befand sich zu Versuchsbeginn trotz Vorentkeimung mit Natriumhypochlorit und kurzer Reinigungsintervalle mit üblichen Reinigungsmitteln in einem stark verschmutzen Zustand, der in den nachfolgenden Tabellen als Druckdifferenz über dem Kerzenfilter oder der Umkehrosmoseanlage der Aufbereitungsanlage angegeben ist.

| **Zu Beginn des Versuchs** | | Kerzenfilter | Umkehrosmose |
|---|---|---|---|
| Druckdifferenz vor Reinigung | bar | 0,5 | 2,7 |
| Druckdifferenz nach Reinigung | bar | 0,08 | 2,4 |
| Reinigungsintervall | Wochen | 3...4 | 3...4 |

Über eine Dosierpumpe wurde dem vorgereinigten Rohwasser Wasserstoffperoxid als 30%ige Lösung in einer Menge zugegeben, dass sich ein Redox-Potential von etwa 300 mV einstellte, dies entsprach einer Konzentration von 3 bis 6 g/m³ H₂O₂ im Rohwasserstrom. Nach einer Betriebszeit von sechs Wochen nach dem erfindungsgemäßen Verfahren ergab sich folgendes Bild:

| **Nach sechs Wochen** | | Kerzenfilter | Umkehrosmose |
|---|---|---|---|
| Druckdifferenz vor Reinigung | bar | 0,25 | 2,5 |
| Druckdifferenz nach Reinigung | bar | keine | 2,0 |
| Reinigungsintervall | Wochen | Reinigung | 6 |

| **Nach 20 Wochen** | | Kerzenfilter | Umkehrosmose |
|---|---|---|---|
| Druckdifferenz vor Reinigung | bar | 0,5 | 2,3 |
| Druckdifferenz nach Reinigung | bar | 0,06 | 1,9 |
| Reinigungsintervall | Wochen | 8 | 16 |

| **Nach 30 Wochen** | | Kerzenfilter | Umkehrosmose |
|---|---|---|---|
| Druckdifferenz vor Reinigung | bar | 0,5 | 2,1 |
| Druckdifferenz nach Reinigung | bar | 0,06 | keine |
| Reinigungsintervall | Wochen | 8 | Reinigung |

Die Salzrückhaltung war im gesamten Versuchszeitraum größer als 98,5%.

Nach einer Versuchsdauer von 30 Wochen kann festgestellt werden, dass es durch das erfindungsgemäße Verfahren gelingt, auf Polymermembranen festhaftende Beläge zu beseitigen, was sich in der deutlichen Absenkung des Differenzdruckniveaus über der Umkehrosmose zeigt. Es gelingt ferner, die Neuverschmutzung soweit einzuschränken, dass sich die Durchsatzleistung zwischen den Reinigungsvorgängen für die Umkehrosmose mindestens vervierfacht. Es ist keine Beeinträchtigung der Trennleistung der Umkehrosmose zu beobachten, weshalb eine Verringerung der Lebensdauer der Membranen bisher nicht absehbar ist. Schließlich kann auf den Einsatz wassergefährdender Stoffe zur Entkeimung verzichtet werden.

## Patentansprüche

1. Verfahren zur Reinigung von Kerzenfiltern und Membrananlagen bei der industriellen Wasseraufbereitung unter Verwendung von Wasserstoffperoxid, **dadurch gekennzeichnet, dass** man einen festen Katalysator unmittelbar vor einer Anordnung, in der sich ein Kerzenfilter unmittelbar im Zulauf vor einer Umkehrosmoseanlage befindet, anordnet und Wasserstoffperoxid dem aufzubereitenden Wasserstrom vor dem Katalysator zusetzt.

2. Verfahren nach Anspruch 1, **dadurch gekennzeichnet, dass** man Wasserstoffperoxid kontinuierlich zuführt.

3. Verfahren nach Anspruch 1 oder 2, **dadurch gekennzeichnet, dass** man die Konzentration an Wasserstoffperoxid im Rohwasser auf 2 bis 10 g/m³ einstellt.

4. Verfahren nach einem der Ansprüche 1 bis 3, **dadurch gekennzeichnet, dass** man hinter der Zuführung von Wasserstoffperoxid in das aufzubereitende Rohwasser eine Mischkammer anordnet.

5. Verfahren nach einem der Ansprüche 1 bis 4, **dadurch gekennzeichnet, dass** man den Katalysator derart vor Umkehrosmosemembran anordnet, daß das zu behandelnde Material eine Zeit von etwa 15 Sekunden benötigt, um vom Katalysator bis zur Membran zu gelangen.

6. Verfahren nach einem der Ansprüche 1 bis 5, **dadurch gekennzeichnet, dass** man Wasserstoffperoxid im Überschuß einsetzt.

## Claims

1. Process for cleaning multiple tube filters and membrane installations used in the industrial water treatment using hydrogen peroxide, **characterized in that** a solid catalyst is arranged directly upstream to an arrangement in which a multiple tube filter is arranged directly in the inlet upstream to a reverse osmosis installation and hydrogen peroxide is added to the current of water to be treated upstream to the catalyst.

2. Process according to claim 1, **characterized in that** the hydrogen peroxide is added continuously.

3. Process according to claim 1 or 2, **characterized in that** the concentration of the hydrogen peroxide in the raw water is adjusted to 2 to 10 g/m³.

4. Process according to one of claims 1 to 3, **characterized in that** downstream to the feeding of the hydrogen peroxide to the raw water to be treated a mixing chamber is arranged.

5. Process according to one of claims 1 to 4, **characterized in that** the catalyst is arranged upstream to the reverse osmosis membrane in such a way that the material to be treated starting from the catalyst needs about 15 seconds in order to get to the membrane.

6. Process according to one of claims 1 to 5, **characterized in that** the hydrogen peroxide is used abundantly.

## Revendications

1. Procédé de purification de filtres Chamberland et de dispositifs à membranes dans le traitement industriel de l'eau, en utilisant du peroxyde d'hydrogène, **caractérisé en ce que** l'on dispose un catalyseur solide directement avant un dispositif, dans lequel se trouve un filtre Chamberland, directement dans l'amenée, avant un dispositif d'osmose inverse et on ajoute le peroxyde d' hydrogène au courant d'eau à traiter avant le catalyseur.

2. Procédé selon la revendication 1, **caractérisé en ce que** l'on alimente en continu en peroxyde d'hydrogène.

3. Procédé selon la revendication 1 ou 2, **caractérisé en ce que** l'on ajuste la concentration en peroxyde d'hydrogène dans l'eau brute de 2 à 10 g/m³.

4. Procédé selon l'une des revendications 1 à 3, **caractérisé en ce que** l'on dispose derrière l'apport en peroxyde d'hydrogène, dans l'eau brute à traiter, une chambre de mélange.

5. Procédé selon l'une des revendications 1 à 4, **caractérisé en ce que** l'on dispose le catalyseur avant la membrane d'osmose inverse, de sorte que le matériau à traiter a besoin d'une période d'environ 15 secondes pour parvenir du catalyseur à la membrane.

6. Procédé selon l'une des revendications 1 à 5, **caractérisé en ce que** l'on met en oeuvre le peroxyde d'hydrogène en excès.
